(19) Europäisches Patentamt
European Patent Office
Office européen des brevets

(11) **EP 3 819 615 B1**

(12) **FASCICULE DE BREVET EUROPEEN**

(45) Date de publication et mention
de la délivrance du brevet:
**25.12.2024 Bulletin 2024/52**

(21) Numéro de dépôt: **20204422.8**

(22) Date de dépôt: **28.10.2020**

(51) Classification Internationale des Brevets (IPC):
***G01J 5/06*** (2022.01)        ***G01J 5/22*** (2006.01)

(52) Classification Coopérative des Brevets (CPC):
**G01J 5/22; G01J 5/061; H04N 23/20; H04N 25/78;**
G01J 2005/202

(54) **PIXEL IR RECONFIGURABLE EN MODE DI OU BDI**

REKONFIGURIERBARER IR-PIXEL IM DI- ODER BDI-MODUS

IR PIXEL RECONFIGURABLE IN DI OR BDI MODE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.11.2019 FR 1912366**

(43) Date de publication de la demande:
**12.05.2021 Bulletin 2021/19**

(73) Titulaire: **Commissariat à l'Energie Atomique et
aux Energies
Alternatives
75015 Paris (FR)**

(72) Inventeur: **NICOLAS, Jean-Alain
38054 GRENOBLE CEDEX 09 (FR)**

(74) Mandataire: **Brevalex
Tour Trinity
1 B Place de la Défense
92400 Courbevoie (FR)**

(56) Documents cités:
**WO-A1-2015/093826     US-B2- 8 878 595**

- HSIEH C-C ET AL: "FOCAL-PLANE-ARRAYS
  AND CMOS READOUT TECHNIQUES OF
  INFRARED IMAGING SYSTEMS", IEEE
  TRANSACTIONS ON CIRCUITS AND SYSTEMS
  FOR VIDEO TECHNOLOGY, INSTITUTE OF
  ELECTRICAL AND ELECTRONICS ENGINEERS,
  US, vol. 7, no. 4, 1 August 1997 (1997-08-01),
  pages 594 - 605, XP000694613, ISSN: 1051-8215,
  DOI: 10.1109/76.611171
- LIBIN YAO: "CMOS readout circuit design for
  infrared image sensors", SPIE - INTERNATIONAL
  SOCIETY FOR OPTICAL ENGINEERING.
  PROCEEDINGS, vol. 7384, 3 July 2009
  (2009-07-03), US, pages 73841B, XP055713309,
  ISSN: 0277-786X, ISBN: 978-1-5106-3549-4, DOI:
  10.1117/12.835520

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 819 615 B1

**Description**

**DOMAINE TECHNIQUE**

La présente invention se rapporte au domaine des dispositifs d'imagerie infrarouge, et en particulier à celui des imageurs infrarouge refroidis et est relative au circuit de lecture des éléments photo-détecteurs, ainsi qu'à leur polarisation.

**ÉTAT DE LA TECHNIQUE ANTÉRIEURE**

Lorsqu'une scène est observée par un imageur infrarouge formé d'une matrice d'éléments de détection, chaque élément de détection délivre un courant proportionnel à l'éclairement reçu par cet élément.

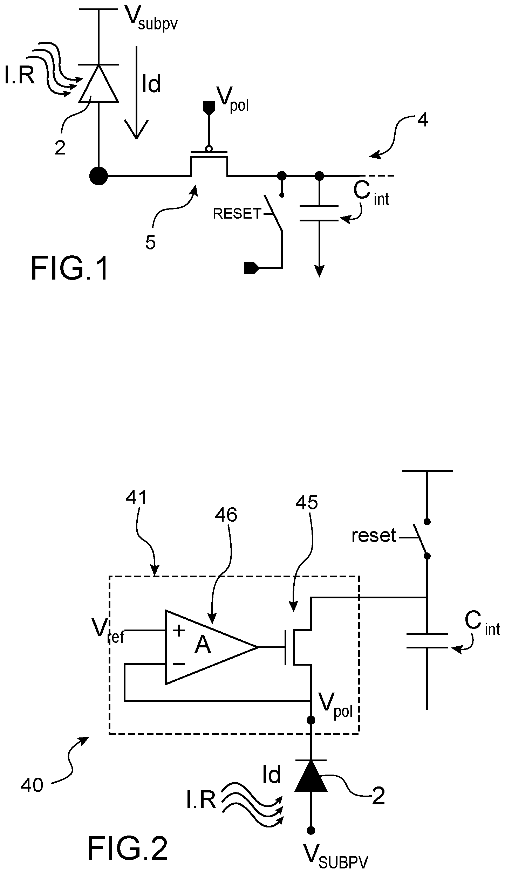

Une structure conventionnelle d'un élément de détection infrarouge IR est illustrée sur la figure 1. L'élément de détection comporte une photo-diode 2 associée et connectée à un circuit de lecture 4 d'un signal généré par la photo-diode 2 également appelé « pixel de lecture ». Le courant issu de la photo-diode 2 est intégré au moyen d'un condensateur Cint pendant une période de temps prédéfinie. Ainsi, à la fin de cette période, chaque pixel de lecture 4 fournit une information sur la partie de la scène observée par la photodiode 2 auquel il est associé.

L'état d'une scène observée peut donc être suivi au moyen de la tension aux bornes du condensateur Cint. Le courant émis par la photodiode 2 traverse dans l'exemple illustré une structure dite d'injection directe (DI pour « Direct injection ») qui sert à polariser la photodiode 2 de manière appropriée et atteint le condensateur $C_{int}$. La structure DI peut être sous forme d'un transistor 5, qui permet de maintenir une polarisation fixe sur la photodiode 2 lors de l'intégration de courant par le condensateur de stockage Cint et d'isoler la photodiode 2 des variations de la tension aux bornes du condensateur Cint.

L'impédance d'entrée Rin de la structure DI, qui représente sa capacité à maintenir une tension de polarisation fixe malgré des variations de courant de photodiode 2, peut s'exprimer par la formule simplifiée suivante :

$$R_{in} \approx \frac{n.k.T}{q.I_d}$$

Cette approximation est due au fait que les niveaux de courants de photodiode 2 sont faibles et que le transistor 5 se trouve typiquement polarisé dans un régime de faible inversion. L'impédance d'entrée Rin est donc ici inversement proportionnelle au courant de photodiode 2 et est indépendante de la taille du transistor 5. Cette impédance d'entrée Rin est d'autant plus importante que le pas des pixels dans la matrice est réduit et que les courants générés sont donc plus faibles.

Un bon indicateur de performance d'un élément de détection est son rendement d'injection qui donne le rapport entre le courant qui rentre qui est donc intégré sur la capacité de stockage Cint et le courant généré par la photodiode 2. Or, une augmentation de l'impédance d'entrée Rin va dans le sens d'une détérioration du rendement d'injection. En statique, cela peut se traduire par des pertes de signal, de sorte que tout le courant généré ne rejoindra pas la capacité d'intégration Cint, ainsi que des non-linéarités, tandis qu'en dynamique, le circuit de lecture a tendance à ne pas réagir aux variations rapides de signal.

La figure 2 donne une structure différente d'un circuit de lecture 40 associé à la photodiode 2. La structure DI a été remplacée par une structure 41 dite BDI pour « Buffer direct injection » ou injection directe à contre-réaction. Cette structure 41 comprend un transistor 45 de polarisation ou encore appelé d'injection directe couplé à la photodiode 2 et au condensateur d'intégration $C_{int}$, auquel un amplificateur 46 de gain A est cette fois associé, en particulier un amplificateur différentiel dont une entrée est connectée à une électrode de source du transistor 45 du transistor d'injection directe. La sortie régit la tension de grille du transistor 45 de polarisation. La source du transistor 45 étant connectée à une borne de la photodiode il y a donc une contre-réaction établie sur un signal servant à polariser la photodiode 2.

Une telle architecture répond au besoin de diminution de l'impédance d'entrée du circuit de lecture puisqu'elle peut permettre une réduction d'un facteur A (A étant le gain de l'amplificateur) par rapport à l'utilisation d'une structure DI. Toutefois la structure BDI peut poser cette fois un problème de consommation inutile dans certains cas.

Il est donc difficile de pouvoir concilier les deux critères précédemment évoqués.

Le document US 9 215 386 B2 présente un circuit de lecture particulier pour un élément de détection d'un imageur, ce circuit de lecture étant reconfigurable et capable d'adopter une configuration parmi plusieurs configurations en fonction du type de détection que l'on souhaite réaliser et/ou de la résolution d'image que l'on souhaite obtenir. Cette possibilité de reconfiguration du circuit de lecture se fait au détriment de la taille du pixel car le circuit de lecture nécessite alors lui-même de nombreux composants pour pouvoir adopter plusieurs modes de fonctionnements distincts. Une telle solution s'appliquerait donc mal aux imageurs infrarouges actuels dont on cherche de plus en plus à réduire la taille. Le document US8878595B2 divulgue un dispositif de lecture reconfigurable. Il se pose le problème de trouver un nouveau dispositif d'imagerie infrarouge amélioré vis-à-vis d'inconvénient(s) mentionné(s) ci-dessus.

**EXPOSÉ DE L'INVENTION**

Un mode de réalisation de la présente demande prévoit un bloc externe de commande de polarisation pour au moins un circuit de lecture d'au moins un photo-détecteur infrarouge, ce bloc de commande étant reconfigurable entre une première configuration et une deuxième configuration et inversement, la première configuration étant une configuration dans laquelle le bloc de commande de polarisation est configuré pour émettre un premier ensemble de signaux de polarisation à un premier étage à transistors du circuit de lecture de sorte que ce premier étage adopte un premier mode de fonctionnement, correspondant en particulier à un premier mode de polarisation du photo-détecteur, en particulier de type à injection directe

la deuxième configuration étant une configuration dans laquelle ce bloc de commande est configuré pour émettre un deuxième ensemble de signaux de polarisation audit premier étage à transistors du circuit de lecture, les signaux du deuxième ensemble étant prévus de sorte que ledit premier étage adopte un deuxième mode de fonctionnement correspondant à un deuxième mode de polarisation du photo-détecteur, en particulier un mode de polarisation de type à injection directe.

Ainsi, c'est un bloc de commande de polarisation externe aux éléments de détection dont on vient modifier la configuration pour pouvoir passer d'un mode de polarisation à l'autre sans nécessairement devoir ajouter de composant au pixel de lecture.

Ainsi, un aspect de la présente invention concerne un dispositif imageur infrarouge comportant une pluralité d'éléments de détection chaque élément de détection comprenant un photo-détecteur associé et connecté à un pixel de lecture d'un signal généré par le photo-détecteur, le pixel de lecture étant doté d'une charge capacitive d'intégration pour stocker des charges provenant du photo-détecteur, le pixel de lecture comprenant un premier étage, couplé au photo-détecteur et à la charge capacitive d'intégration, ledit premier étage étant doté de transistors et servant à la polarisation du photo-détecteur,

le dispositif imageur étant doté d'au moins un bloc de commande de polarisation externe à ladite pluralité d'éléments de détection, ledit bloc de commande de polarisation externe étant apte à appliquer audit premier étage du pixel de lecture un ensemble de potentiels de polarisation, le bloc de commande de polarisation externe étant reconfigurable de sorte à être apte à passer d'une première configuration à une deuxième configuration et de la deuxième configuration à la première configuration, la première configuration étant une configuration dans laquelle le bloc de commande de polarisation est configuré pour émettre un premier ensemble de signaux de polarisation audit premier étage de sorte que ledit premier étage adopte un premier mode de fonctionnement correspondant à un premier mode de polarisation du photo-détecteur.

La deuxième configuration étant une configuration dans laquelle le bloc de commande est configuré pour émettre un deuxième ensemble de signaux de polarisation audit premier étage, les signaux du deuxième ensemble étant différents des signaux du premier ensemble et prévus de sorte que ledit premier étage à transistors adopte un deuxième mode de fonctionnement correspondant à un deuxième mode de polarisation du photo-détecteur.

Le premier mode de polarisation du photodétecteur est typiquement un mode de polarisation à injection directe (DI), tandis que ledit deuxième mode de polarisation de la photodiode est typiquement un mode de polarisation à injection directe contre-réactionnée (BDI) du photodétecteur.

Dans le mode d'injection directe un ensemble de transistors du premier étage sont polarisés de sorte que ledit pixel de lecture a une première impédance d'entrée, tandis que dans le mode d'injection directe contre réactionnée, ledit ensemble de transistors dudit premier étage sont polarisés de sorte que ledit pixel de lecture a une deuxième impédance d'entrée inférieure à la première impédance.

Un bloc de commande de polarisation externe permet de configurer individuellement en mode DI ou BDI les éléments de détection. Avec un bloc de commande externe, la configuration d'un élément de détection DI ou BDI d'un élément de détection n'est pas nécessairement liée à celle d'un élément de détection voisin. Avec le bloc de commande de polarisation externe il est possible de configurer en un même mode DI ou BDI deux éléments de détection adjacents ou voisins d'une même rangée (ligne ou colonne) d'élément de détection.

Le premier étage est formé d'un premier transistor dit d'injection directe connecté au photo-détecteur et à la charge capacitive d'intégration, d'un deuxième transistor, et d'un troisième transistor, le deuxième transistor et le troisième transistor étant connectés au bloc de commande de polarisation externe.

Un étage avec seulement trois transistors peut être prévu pour gérer la polarisation du photo-détecteur et passer d'un mode DI à un mode BDI et inversement.

Dans le premier mode de fonctionnement, les signaux du premier ensemble de signaux de polarisation peuvent être prévus de sorte à faire fonctionner le troisième transistor comme un interrupteur fermé tout faisant fonctionner le deuxième transistor comme un interrupteur ouvert ou tout en rendant inopérant le deuxième transistor en l'isolant du reste du premier étage.

Avantageusement, dans le premier mode de fonctionnement, une électrode du deuxième transistor peut être laissée flottante. On s'assure de cette manière qu'aucun courant ne passe à travers le deuxième transistor.

Dans le deuxième mode de fonctionnement, le deuxième transistor et le troisième transistor peuvent réaliser un amplificateur de courant.

Avantageusement, dans la deuxième configuration, le bloc de commande applique un potentiel négatif à une électrode du deuxième transistor. En utilisant une telle polarisation négative plutôt que par exemple une mise à la masse, un gain en dynamique de tension aux bornes de la charge capacitive peut être obtenu, ce qui peut permettre d'améliorer le rapport signal sur bruit.

Selon un mode de réalisation le bloc de commande de polarisation comporte une portion de circuit apte à former un miroir de courant. Dans ce cas, dans la deuxième configuration, le troisième transistor forme avec ladite portion de circuit ce miroir de courant, de sorte à copier un courant généré par ladite portion de circuit du bloc de commande.

Le bloc de commande de polarisation externe peut être doté d'une pluralité de sorties vers lesquelles les signaux de polarisation formant un ensemble de signaux de polarisation sont respectivement émis, et d'au moins un circuit de commutation comportant une pluralité d'interrupteurs, le circuit de commutation permettant de connecter sélectivement chaque sortie à une ou plusieurs voies d'une pluralité de voies auxquelles des potentiels de polarisation sont appliqués, un ou plusieurs interrupteurs donnés de ladite pluralité d'interrupteur ayant des états respectifs, ouvert ou fermé, différents entre ladite première configuration et ladite deuxième configuration.

Un mode de réalisation particulier prévoit d'affecter à un ou plusieurs éléments de détection d'un imageur un mode de polarisation de type DI et concomitamment à un ou plusieurs autres éléments de détection de l'imageur un mode de polarisation de type BDI

Ainsi, selon une possibilité de mise en oeuvre pour laquelle une pluralité d'éléments de détection est située dans une première région d'une matrice d'éléments de détection, un premier ensemble de signaux de polarisation est émis par ledit bloc de commande de polarisation à cette pluralité d'éléments de détection, tandis qu'à une deuxième pluralité d'éléments de détection de l'imageur situés dans une deuxième région de la matrice d'éléments de détection on applique concomitamment un deuxième ensemble de signaux de polarisation distinct des signaux du premier ensemble.

Selon une possibilité de mis en oeuvre du dispositif comprenant un autre bloc de commande de polarisation externe, ledit autre bloc de commande de polarisation externe étant couplé à ladite deuxième pluralité d'éléments de détection et apte à appliquer aux pixels de lecture respectifs dudit deuxième ensemble d'éléments de détection, ledit deuxième ensemble de signaux de polarisation.

Selon un aspect particulier, l'invention concerne un imageur infrarouge refroidi comprenant un dispositif imageur tel que défini plus haut.

## BRÈVE DESCRIPTION DES DESSINS

La présente invention sera mieux comprise sur la base de la description qui va suivre et des dessins en annexe sur lesquels :

La figure 1 sert à illustrer, dans un imageur infrarouge, un exemple de pixel de lecture de type DI (« Direct Injection ») ;

La figure 2 sert à illustrer, dans un imageur infrarouge, un exemple de pixel de lecture de type BDI (« Buffered Direct Injection ») ;

La figure 3 sert à illustrer un exemple de dispositif imageur infrarouge associant à un pixel de lecture d'un élément de photo-détection, un bloc de commande de polarisation externe reconfigurable étant amené à faire passer ce pixel de lecture d'un mode de fonctionnement de type DI à un mode de fonctionnement de type BDI et inversement ;

La figure 4 sert à illustrer un agencement particulier du bloc de commande de polarisation externe situé à une extrémité d'une rangée d'éléments de détection ;

La figure 5A sert à illustrer une première configuration d'un circuit de commutation du bloc de commande de polarisation pour faire adopter au circuit de lecture un mode de fonctionnement de type DI ;

La figure 5B sert à illustrer une deuxième configuration d'un circuit de commutation du bloc de commande de polarisation pour faire adopter au circuit de lecture un mode de fonctionnement de type BDI ;

Les figures 6 et 7 servent à illustrer une variante d'agencement du circuit de lecture adaptée à une connexion de ce dernier sur une zone P d'une photodiode de type P sur N ;

La figure 8A sert à illustrer un mode de réalisation particulier dans lequel un imageur est doté d'éléments de détection fonctionnant en mode DI et d'autres d'éléments de détection fonctionnant de manière concomitante en mode BDI ;

La figure 8B sert à illustrer un imageur doté d'une région fonctionnant en mode DI et d'une autre région fonctionnant de manière concomitante en mode BDI, ces régions ayant leurs modes de fonctionnement respectifs DI ou BDI imposés par des blocs de commande de polarisation distincts ;

La figure 9 sert à illustrer un système numérique dans lequel le bloc de commande de polarisation et en particulier la configuration de son circuit de commutation est-elle-même commandée par un contrôleur ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

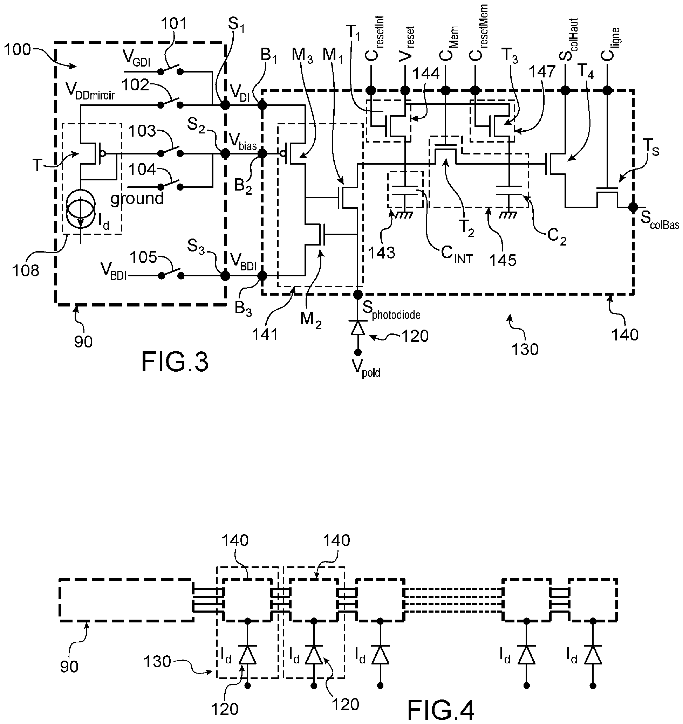

Un exemple de structure d'un circuit de lecture 140 d'imageur infrarouge tel que mis en oeuvre suivant un mode de réalisation de la présente invention est donné sur la figure 3.

Le circuit de lecture 140, également appelé « pixel de lecture », est connecté à un photo-détecteur tel qu'une photodiode 120 qui transforme un rayonnement infrarouge en un courant électrique. La photodiode 120 et le circuit de lecture 140 associé forment un élément de détection 130. L'imageur compte généralement une pluralité d'éléments de détection 130 qui peuvent être agencés en matrice, d'une ou plusieurs rangées d'éléments de détection.

La photodiode 120 est typiquement polarisée en inverse et délivre au circuit de lecture 140 un courant représentatif d'une scène observée. La photodiode 120 peut être en particulier réalisée dans un substrat en matériau de type III-V, par exemple, InP, GaAS, InGaAs, InSb ou de type II-VI par exemple HgCdTe et peut être rapportée sur le circuit de lecture 140 selon un assemblage que l'on nomme couramment « hybridation ». Le circuit de lecture 140 et la photodiode 120 sont alors reliés mécaniquement et électriquement par exemple par le biais de billes métalliques.

Pour polariser la photodiode 120, on applique à une de ses bornes un potentiel Vpold, tandis que l'autre borne Sphotodiode est couplée à un étage 141 du circuit de lecture 140, sous forme d'un circuit à transistor(s). Dans cet exemple, l'étage 141 est formé seulement de 3 transistors M1, M2, M3. Le potentiel Vpold est avantageusement un potentiel qui demeure fixe d'une lecture à l'autre du courant de la photodiode.

Les transistors M1, M2, M3, en fonction de la manière dont ils sont eux-mêmes polarisés et le régime de fonctionnement qu'ils adoptent en conséquence permettent d'ajuster la polarisation à une borne Sphotodiode de la photodiode 120 ainsi que l'impédance d'entrée Rin du circuit de lecture 140. La polarisation des transistors M1, M2, M3 qui détermine la polarisation de la photodiode 120 ainsi que l'impédance d'entrée Rin du circuit de lecture 140, est ici destiné à être modulé. Une particularité de ce dispositif, réside en effet en ce que la polarisation des transistors M1, M2, M3, est amenée à être modifiée après conception de l'imageur et lorsque ce dernier se trouve en fonctionnement en modifiant les potentiels de polarisations appliqués à des bornes B1, B2, B3, du circuit de lecture 140. De cette manière, l'étage 141, est susceptible d'adopter des modes de fonctionnements différents correspondants à des modes de polarisations différents appliqués à la photodiode.

Dans cet exemple de réalisation l'étage 141 compte un premier transistor M1 relié à la photodiode 120 et appelé transistor d'injection directe. Ce premier transistor M1 permet de lire le signal délivré par la photodiode 120 et de maintenir une polarisation adéquate sur la photodiode 120 lors d'une intégration de courant provenant de la photodiode 120. Le premier transistor M1 est dans cet exemple de réalisation un transistor de type N, en particulier un transistor NMOS, dont une électrode, en particulier le drain, est reliée à une charge capacitive d'intégration 143, et dont une autre électrode, en particulier la source, est reliée à la photodiode 120. La charge capacitive 143 est par exemple formée d'un condensateur Cint.

L'étage 141 est ici également formé d'un deuxième transistor M2, et d'un troisième transistor M3 qui, dans cet exemple de réalisation, respectivement de type N, en particulier un NMOS et de type P, en particulier un PMOS. Les transistors M2 et M3 ont une électrode commune, dans cet exemple une électrode de drain, qui est reliée à la grille du transistor d'injection directe M1. Dans l'exemple de réalisation illustré sur la figure 3, la source et la grille du troisième transistor M3 sont reliées respectivement à la borne B1 et à la borne B2. Le deuxième transistor M2 a quant à lui dans cet exemple une source reliée à la borne B3, et une grille reliée à la borne Sphotodiode de la photodiode 120.

Les transistors M2 et M3 sont reliés aux bornes B1, B2, B3 auxquelles des signaux de polarisation destinés à l'étage 141 sont destinés à être appliqués et qui proviennent de sorties S1, S2, S3 d'un bloc 90 de commande de signaux de polarisation.

Ce bloc 90 de commande de polarisation est externe au circuit de lecture 140 et à l'élément de détection 130. Le bloc 90 de commande peut être un circuit situé en bord de la matrice d'éléments de détection 130 et donc situé à l'extérieur de cette matrice.

Le bloc 90 de commande peut être configuré pour appliquer des signaux de polarisation aux circuits de lecture 140 respectifs et en particulier aux étages 141 à transistors respectifs de plusieurs éléments de détection 130.

Dans l'exemple de réalisation particulier illustré sur la figure 4, le bloc 90 de commande de polarisation est situé en bord d'une rangée, par exemple une rangée horizontale (également appelée ligne), d'éléments de détection 130 et applique des signaux de polarisation aux circuits de lecture 140 respectifs, et en particulier aux étages 141 à transistors respectifs des éléments de détection 130 de cette rangée.

Comme indiqué plus haut, une particularité du dispositif réside en ce que l'étage 141 du circuit de lecture 140 peut adopter plusieurs modes de fonctionnement et en particulier alterner entre deux modes de fonctionnement.

Dans l'exemple de réalisation illustré, le circuit de lecture 140 peut passer d'un mode de polarisation de type à injection directe ou DI (pour « Direct Injection ») à un mode de polarisation de type à injection directe contre-réactionnée ou BDI (pour « Buffered Direct Injection ») et inversement. Le passage d'un mode de fonctionnement à l'autre, autrement dit à un mode de polarisation à l'autre de la photodiode 120 (DI vers BDI ou BDI vers DI), est ici réalisé sans nécessairement devoir ajouter de composant(s) et en particulier de transistor supplémentaire, en modifiant la manière dont l'étage 141, ici formé de 3 transistors est polarisé.

Le passage d'un mode de fonctionnement à l'autre est mis en oeuvre au moyen des signaux de polarisation aux bornes B1, B2, B3 émis par le bloc de commande 90. Le bloc de commande 90 est en particulier prévu pour transmettre une première série de signaux de polarisation aux bornes B1, B2, B3 de l'étage 41 afin de placer le circuit de lecture dans un mode de polarisation DI et pour transmettre aux bornes B1, B2, B3 une deuxième série de signaux de polarisation, différente de la première série à l'étage 41 afin de placer le circuit de lecture 140 dans un mode de polarisation BDI.

On assure ici une re-configurabilité du pixel de lecture 140 sans ajouter de transistor supplémentaire dans ce pixel. On déporte la gestion de la commutation d'un mode de fonctionnement à l'autre en périphérie de la matrice de pixels, par exemple en bout de ligne ou en bout de colonne.

Pour assurer cette re-configurabilité un mode de réalisation on peut typiquement prévoir de doter le bloc de commande 90 d'au moins un circuit de commutation 100. Le circuit de commutation 100 est dans cet exemple pourvu d'interrupteurs 101, 102, 103, 104, 105 qui permettent, en fonction de leurs états respectifs, fermé ou ouvert (ON ou OFF) d'alternativement connecter une sortie S1, S2, S3 à une voie de polarisation ou déconnecter une sortie S1, S2, S3 d'une voie de polarisation.

Lorsqu'un premier interrupteur 101 est dans un état fermé (et qu'un deuxième interrupteur 102 est ouvert), cet interrupteur 101 permet par exemple de relier la sortie S1 à une voie de polarisation sur laquelle un premier potentiel d'alimentation $V_{GDI}$ est appliqué.

Lorsque le deuxième interrupteur 102 est ouvert (et que le premier interrupteur 101 est fermé) cela permet par exemple de relier la sortie S1 à une voie de polarisation sur laquelle un potentiel VDDmiroir est émis. Ce potentiel VDDmiroir est par exemple délivré par une portion de circuit 108 du bloc de commande 90 apte à former un miroir de courant.

Lorsqu'un troisième interrupteur 103 est fermé (et qu'un quatrième interrupteur 104 est ouvert) cela permet par exemple de relier la sortie S2 à une voie de polarisation correspondant à un potentiel de grille d'un transistor T de la portion 108 de circuit.

A l'état fermé (et lorsque le troisième interrupteur 103 est ouvert) le quatrième interrupteur 104 permet par exemple de relier la sortie S2 à la masse.

A l'état fermé, un cinquième interrupteur 105 permet par exemple de relier la sortie S3 à une voie de polarisation sur laquelle un potentiel d'alimentation $V_{BDI}$ est appliqué.

A l'état ouvert, le cinquième interrupteur 105 permet de laisser la sortie S3 flottante et la borne B3 connectée à cette sortie S3 également flottante.

Le bloc 90 de commande de polarisation externe et en particulier son circuit de commutation 100 est ainsi reconfigurable en fonction de signaux (non représentés) de commande d'ouverture ou de fermeture des interrupteurs 101, 102, 103, 104, 105.

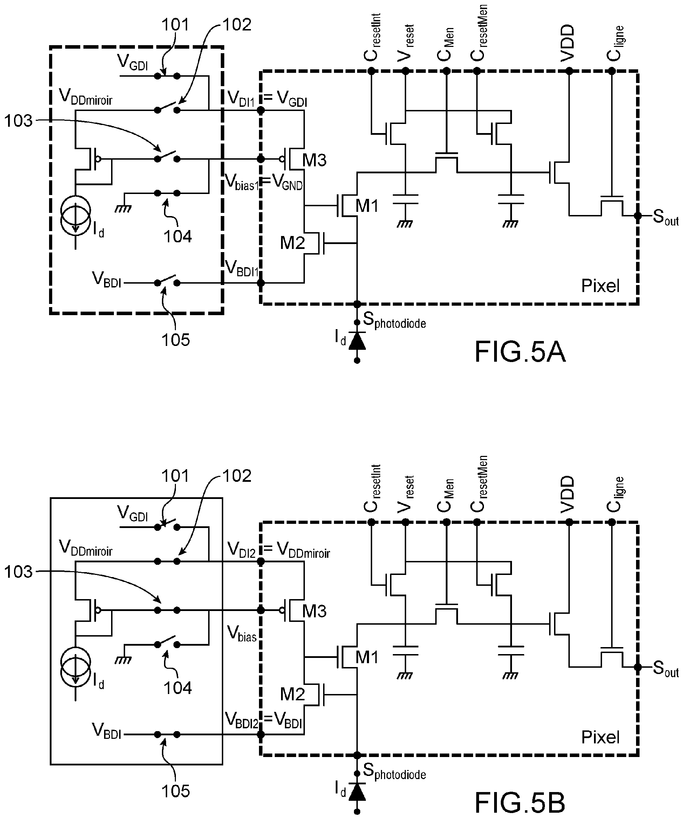

Les figures 5A, 5B illustrent deux configurations distinctes du bloc 90 de commande de polarisation.

Une première configuration (figure 5A) du circuit de commutation 100 dans laquelle les interrupteurs 101, 102, 103, 104, 105 sont respectivement dans un état fermé, ouvert, ouvert, fermé, ouvert, permet d'émettre un ensemble de signaux VDI1=VGDI, Vbias1=VGND, VBDI1=VBDI de polarisation aux bornes B1, B2, B3 connectées à l'étage 141 à transistors. Dans cette première configuration, l'étage 141 du circuit de lecture se trouve polarisé de sorte qu'il adopte un mode de fonctionnement (correspondant à un mode de polarisation de la photodiode) d'injection directe (DI).

Les potentiels VDI1=VGDI, Vbias1=VGND appliqués respectivement à la source et à la grille du troisième transistor M3, sont prévus de sorte que ce transistor M3 fonctionne en interrupteur, le transistor M3 étant rendu passant de sorte à acheminer la tension $V_{GDI}$ jusqu'à la grille du premier transistor M1 d'injection directe. VGDI est dans cet exemple un potentiel positif qui peut être par exemple de l'ordre de 1V L'état ouvert du cinquième interrupteur 105 dans le circuit de commutation 100 rend la borne B3 flottante ce qui permet de s'assurer que le deuxième transistor M2 fonctionne comme un interrupteur ouvert et ainsi laissé inopérant dans l'étage 141.

En rendant la borne B3 flottante, on permet ainsi de s'assurer qu'aucun courant supplémentaire ne circule à travers ce transistor M2 et que la grille du transistor d'injection directe est uniquement polarisée par l'intermédiaire du potentiel $V_{DI}$. Dans ce mode de fonctionnement DI, le transistor d'injection M1 qui est monté en cascode, reçoit un potentiel fixe sur sa grille. La polarisation des transistors M1, M2, M3 est alors telle que la résistance d'entrée du circuit de lecture 140 a une première valeur.

Une deuxième configuration (figure 5B) du circuit de commutation 110 dans laquelle les interrupteurs 101, 102, 103, 104, 105 sont respectivement dans un état ouvert, fermé, fermé, ouvert, fermé, permet d'émettre un ensemble de signaux VDI2=VDDmiroir, Vbias2, VBDI2=VBDI de polarisation aux bornes B1, B2, B3 connectées à l'étage 141 à transistors. Dans cette deuxième configuration, l'étage 141 du circuit de lecture se trouve polarisé de sorte qu'il adopte un mode de fonctionnement, correspondant à un mode de la polarisation de la photodiode en injection directe à contre-réaction (BDI).

Les potentiels VDI2=VDDmiroir, Vbias2, VBDI2=VBDI sont prévus de sorte que les transistors M2, M3 forment un amplificateur de courant. Le troisième transistor M3 est ici polarisé de manière à former une source de courant. Cette source de courant provient du fait que, dans cet exemple de réalisation, la deuxième configuration est telle que la portion 108 du bloc de commande et le troisième transistor M3 forment un montage en miroir de courant. Le potentiel Vbias2 dans cet exemple appliqué à la grille du troisième transistor M3 reliée à la portion de circuit 108 permet de fixer le courant de l'amplificateur réalisé par les transistors M2, M3.

Dans cette deuxième configuration, un potentiel VBDI2=VBDI est appliqué à la source du deuxième transistor M2. Ce potentiel VBDI peut dans cet exemple, être prévu égal au potentiel de masse GND ou de préférence être un potentiel négatif.

En mode BDI, plutôt que de mettre la borne B3 à la masse, en venant adresser une tension négative sur la source du deuxième transistor M2 on améliore la dynamique de tension de la charge capacitive 143. Ce gain de dynamique de tension est particulièrement significatif lorsque l'imageur est de type refroidi et permet une amélioration du rapport signal sur bruit.

Dans le mode de fonctionnement BDI, du fait que le transistor M2 est cette fois rendu opérant, une contre réaction est appliquée sur la grille du premier transistor M1 et une polarisation contre-réactionnée d'une borne de la diode est mise en oeuvre. La polarisation des transistors M1, M2, M3 est telle que la résistance d'entrée a dans ce mode BDI une deuxième valeur plus faible que la première valeur de résistance d'entrée dans le mode DI mais également une consommation en courant correspondante plus élevée que dans la première configuration.

Dans un circuit de lecture 140 tel que celui illustré sur la figure 3, hormis l'étage 141, dont le fonctionnement vient d'être décrit, le reste du circuit de lecture 140 peut suivre une structure plus conventionnelle.

Ainsi, l'étage 143 formant une charge capacitive et permettant d'intégrer le courant issu de la photodiode 120 est dans l'exemple illustré couplé à un étage 144 de remise à zéro de la charge capacitive 143. Cet étage 144 est commandé par un signal CresetInt est peut comprendre un transistor T1 que l'on rend dans cet exemple passant lorsque l'on souhaite vider les charges stockées par la capacité Cint.

Un étage 145 de mémorisation est couplé à la charge capacitive 143 et sert à dupliquer une valeur de tension aux bornes de la capacité d'intégration une fois la période d'intégration écoulée.

Dans cet exemple, l'étage 145 de mémorisation est doté d'un transistor $T_2$, fonctionnant en interrupteur commandé par un signal $C_{Mem}$, agencé entre le condensateur d'intégration et une capacité $C_2$ de mémorisation. Pour permettre de vider les charges stockées par la capacité de mémorisation et remettre à zéro la valeur de tension mémorisée aux bornes de cette capacité $C_2$, un autre étage 147 de remise à zéro peut être prévu. Cet autre étage 147 est dans cet exemple formé d'un transistor $T_3$ interrupteur que l'on rend passant par le biais d'un signal CresetMem pour décharger la capacité $C_2$, une fois la valeur de tension mémorisée transférée.

Le circuit de lecture 140 est également muni d'un transistor $T_4$ suiveur et d'un transistor $T_5$ de sélection de ligne. Les transistors $T_4$ et $T_5$ sont dans cet exemple également de type N, en particulier NMOS

Le circuit de lecture 140 de cet exemple de réalisation particulier a une structure de type IWR (pour « Integrate While Read » ou Intégration pendant lecture), qui du fait de la présence de l'étage de mémorisation, lui permet d'effectuer une intégration pendant qu'une lecture d'une valeur de signal résultant d'une précédente intégration est effectuée.

On peut toutefois prévoir d'associer l'étage 141 à transistors $M_1$, $M_2$, $M_3$ permettant de faire varier l'impédance d'entrée Rin, à un autre type de structure en aval de la charge capacitive 143 ou à une charge capacitive de structure différente de celle de l'exemple illustré.

Un circuit de lecture 140 tel que décrit précédemment en lien avec les figures 3, 4, 5A-5B, et doté d'un étage 141 avec des transistors M1, M2, M3, respectivement de type N, de type N et de type P s'applique en particulier à une photodiode 120 dite « P sur N » c'est à dire dotée d'une zone P surmontée d'une zone N à laquelle l'étage 141 du circuit de lecture est connectée, en particulier à laquelle la source du premier transistor M1 et la grille du deuxième transistor M2 sont connectés.

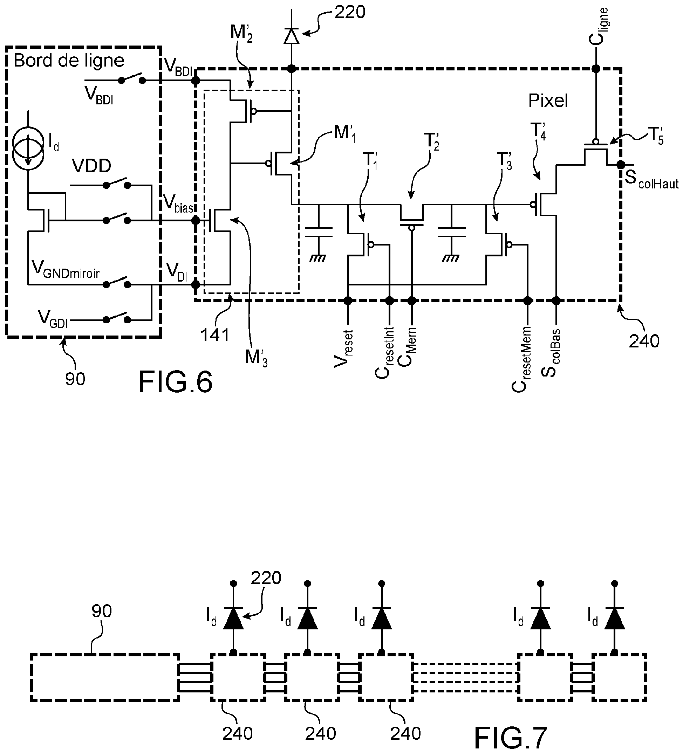

Une variante d'agencement de circuit de lecture 240 adaptée cette fois à une photodiode 220 dite « N sur P », autrement dit dotée d'une zone N surmontée d'une zone P à laquelle le circuit de lecture est connectée, est donnée sur les figures 6 et 7. L'étage 241 à transistors dont le mode de polarisation est apte à être modifié pour permettre d'adapter les modes de fonctionnement DI et BDI, est également composé de 3 transistors M'1, M'2, M'3. Cette fois, le premier transistor M'1 est de type P, par exemple PMOS. La grille de ce transistor M'1 est connectée à une électrode commune entre un deuxième transistor M'2 de type P, en particulier PMOS, et un troisième transistor M'3 de type N, en particulier NMOS.

Le transistor $T'_1$ de l'étage de remise à zéro du condensateur d'intégration, $T'_2$ de l'étage de mémorisation, $T'_3$ de remise à zéro de la capacité de mémorisation, ainsi que les transistors $T'_4$, $T'_5$ de sélection de colonne et de ligne sont de type opposé à celui du dispositif précédemment décrit, et dans cet exemple de type P (en particulier de type PMOS).

La figure 7 montre, pour cette variante, le bloc de commande de polarisation 90 en bord de rangée ou de ligne et permettant d'adapter le mode de polarisation DI ou BDI connecté aux circuits de lecture ou pixels de lecture 240 respectifs des éléments de détection de cette rangée. Dans cet exemple, on impose aux pixels de lecture d'une même rangée un même mode de polarisation, ce mode de polarisation pouvant être éventuellement partagé par toutes les lignes de la matrice.

En variante, on peut prévoir d'imposer un mode de fonctionnement, en particulier DI ou BDI à une région d'un imageur tandis qu'au même moment, une autre région de cet imageur est soumise à un autre mode de fonctionnement différent, BDI ou DI.

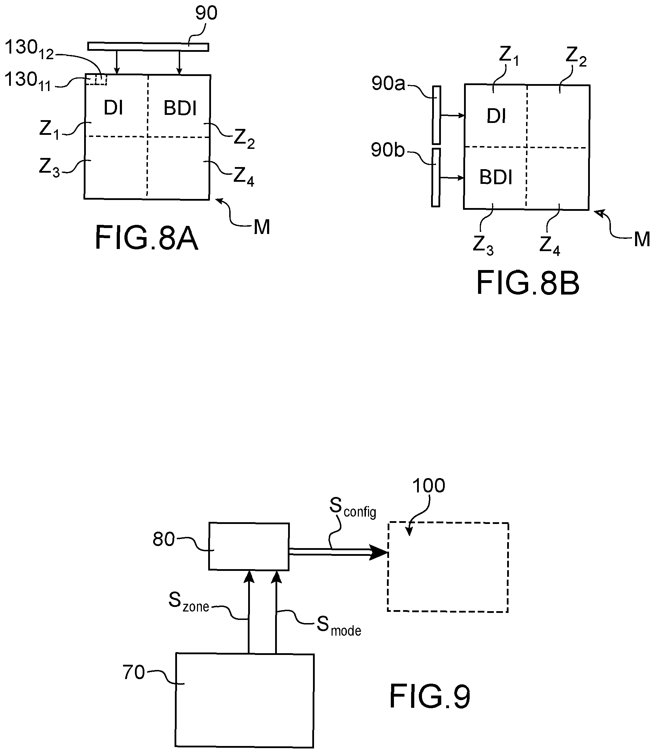

Dans l'exemple de réalisation particulier illustré sur la figure 8A, une première région Z1 d'une matrice d'éléments de détection $130_{ij}$ est ainsi soumise à un mode DI, tandis qu'à une autre région Z2 de cette matrice on impose le mode BDI. Ainsi des éléments adjacents ou voisin $130_{11}$ et $130_{12}$ de la première région Z1 peuvent être mis chacun en mode DI, tandis que des éléments adjacents ou voisin (non référencés sur la figure) de la première région Z2 peuvent être mis chacun en mode BDI.

Ainsi, les circuits de lecture respectifs des éléments de détection de la première région Z1 sont soumis à un ensemble de signaux de polarisation VDI1, VBIAS1, VBI1 différents des signaux VDI2, VBIAS2, VBI2, de polarisation des circuits de lecture respectifs des éléments de détection de la deuxième région Z2.

La deuxième région Z2 peut être une région de l'imageur correspondant à une région de la scène pour laquelle on privilégie la qualité d'image, la première région Z1 correspondant à une région d'image de moindre qualité. Dans l'exemple illustré sur la figure 8A, les deux ensembles de signaux de polarisation VDI1, VBIAS1, VBI1, VDI2, VBIAS2, VBI2 affectés respectivement à la première région Z1 et à la deuxième région Z2 proviennent d'un même bloc de commande de polarisation 90 externe à la matrice M d'éléments de détection.

On peut également prévoir comme sur la variante illustrée sur la figure 8B, un dispositif avec plusieurs blocs de commande distincts 90a, 90b. Dans ce cas un premier bloc de commande 90a peut être configuré pour appliquer des signaux de polarisation à une région Z1, pour lui faire adopter un mode de fonctionnement particulier sélectionné entre plusieurs modes de fonctionnement, en particulier entre un fonctionnement DI ou BDI, tandis qu'un deuxième bloc de commande 90b est configuré pour appliquer des signaux de polarisation à une autre région Z3, et lui faire adopter un mode de fonctionnement donné entre plusieurs modes de fonctionnement, en particulier entre un fonctionnement BDI ou DI.

Un bloc de commande de polarisation externe et reconfigurable tel que décrit dans l'un ou l'autre des modes de réalisation peut être doté ou associé à un contrôleur permettant d'imposer au(x) circuit(s) de commutation la ou leurs configurations respectives.

Un agencement particulier illustré sur la figure 9 prévoir un contrôleur 80 externe à l'imageur ou à la puce contenant l'imageur, ou encore intégré sur la puce. Ce contrôleur 80 peut être un circuit doté d'au moins un bloc logique, ou par exemple sous forme d'un micro-processeur ou d'un circuit ASIC (pour « application-specific integrated circuit » ou «circuit intégré propre à une application ») amené à modifier la configuration du ou des circuits de commutation par le biais de signaux de configuration Sconfig.

Le contrôleur 80 peut être lui-même commandé par un système de commande numérique 70 émettant par exemple au moins un signal Szone de sélection de région donnée d'imageur, un signal Smode relatif à une sélection de mode de fonctionnement donné, DI ou BDI, ou un signal $S_{zone/mode}$ associant à une région donnée d'imageur, un mode de fonctionnement donné choisi en particulier entre DI et BDI.

Le choix d'un mode de fonctionnement donné, DI ou BDI, à une région donnée d'imageur peut dépendre du niveau de résolution que l'on souhaite affecter à cette région donnée, cette affectation pouvant elle-même dépendre d'une discrimination effectuée entre au moins une zone d'intérêt et au moins une autre zone de moindre intérêt identifié dans une scène détectée par l'imageur.

Le système de commande 70 peut être par exemple sous forme d'un processeur de données, intégré ou non sur la puce, ou d'un ordinateur destiné à recevoir des données permettant de définir une ou des zones d'intérêt sur une scène imagée afin de générer un signal permettant d'affecter à au moins une région de la matrice un mode de fonctionnement BDI et à une autre région de la matrice un mode de fonctionnement DI pour laquelle la précision de détection est plus basse mais où l'on réduit la consommation en courant.

L'un ou l'autre des exemples de réalisation décrits plus haut s'appliquent particulièrement aux imageurs infrarouge refroidis et donc dotés d'un dispositif de refroidissement de la matrice, en particulier un dispositif fluidique où l'on fait circuler un fluide de refroidissement pour maintenir l'imageur à une température de fonctionnement basse, par exemple inférieure à 150K.

Le dispositif suivant l'invention s'applique en particulier à des imageurs infrarouge refroidis munis de photo-détecteurs conçus pour fonctionner à des températures « élevées », par exemple entre 130 K et 150 K mais pour lesquels la valeur de la résistance $R_{shunt}$ est faible. Le dispositif suivant l'invention s'applique également avantageusement à des applications dites « faible flux », de l'ordre de dizaines de pico ampères ou inférieurs.

**Revendications**

1.  Dispositif imageur infrarouge comportant un ensemble d'éléments de détection (130) chaque élément de détection dudit ensemble d'éléments de détection (130) comprenant un photo-détecteur (120, 220) associé et connecté à un pixel de lecture (140, 240) d'un signal généré par le photo-détecteur (120, 220), le pixel de lecture (140, 240) étant doté d'une charge capacitive d'intégration (143) pour stocker des charges provenant du photo-détecteur (120, 220), le pixel de lecture (140, 240) comprenant un premier étage (141, 241), couplé au photo-détecteur (120, 220) et à la charge capacitive d'intégration (143), ledit premier étage étant doté de transistors (M1, M'1, M2, M'2, M3, M'3) et servant à la polarisation du photo-détecteur (120, 220),

    le dispositif imageur étant doté d'au moins un bloc (90) de commande de polarisation ledit bloc (90) de commande de polarisation étant apte à appliquer audit premier étage (141, 241) du pixel de lecture (40, 240) un ensemble de potentiels de polarisation, le bloc (90) de commande de polarisation étant reconfigurable de sorte à être apte à passer d'une première configuration à une deuxième configuration et de la deuxième configuration à la première configuration,

la première configuration étant une configuration dans laquelle le bloc (90) de commande de polarisation est configuré pour émettre un premier ensemble de signaux de polarisation (VDI1, VBIAS1, VBI1) audit premier étage (141, 241) de sorte que ledit premier étage (141, 241) adopte un premier mode de fonctionnement correspondant à un premier mode de polarisation du photo-détecteur (120, 220),

la deuxième configuration étant une configuration dans laquelle le bloc de commande est configuré pour émettre un deuxième ensemble de signaux de polarisation (VDI2, VBIAS2, VBI2) audit premier étage (141, 241), les signaux du deuxième ensemble étant différents des signaux du premier ensemble et prévus de sorte que ledit premier étage (141, 241) à transistors adopte un deuxième mode de fonctionnement correspondant à un deuxième mode de polarisation du photo-détecteur (120, 220), ledit premier mode de polarisation du photo-détecteur (120, 220) étant un mode de polarisation à injection directe (DI) pour lequel un ensemble de transistors (M2, M'2, M3, M'3) du premier étage (141, 241) sont polarisés de sorte que ledit pixel de lecture (140) a une première impédance d'entrée, ledit deuxième mode de polarisation de la photodiode étant un mode de polarisation à injection directe contre-réactionnée (BDI) du photodétecteur pour lequel ledit ensemble de transistors (M2, M'2, M3, M'3) dudit premier étage (141, 241) sont polarisés de sorte que ledit pixel de lecture (140, 240) a une deuxième impédance d'entrée inférieure à la première impédance,

dans lequel chaque élément de détection dudit ensemble d'éléments de détection comprend un pixel de lecture (140, 240), **caractérisé en ce que**

ledit bloc (90) de commande de polarisation est externe audit ensemble d'éléments de détection (130), chaque élément de détection est doté de son pixel de lecture respectif dont le premier étage (141, 241) respectif comprend un premier transistor (M1, M'1) dit d'injection directe, un deuxième transistor (M2, M'2), et un troisième transistor (M3, M'3), le premier transistor (M1, M'1) dit d'injection directe étant connecté au photo-détecteur (120, 220) et à la charge capacitive d'intégration (143), le premier transistor (M1, M'1) ayant une grille connectée à une électrode de drain commun du deuxième transistor (M2, M'2) et du troisième transistor (M3, M'3), le deuxième transistor (M2, M'2) et le troisième transistor (M3) étant agencés de sorte à recevoir des signaux de polarisation (VDI1, VBIAS1, VBI1, VDI2, VBIAS2, VBI2) provenant dudit bloc (90) de commande de polarisation externe.

2. Dispositif imageur infrarouge selon la revendication 1, dans lequel dans le premier mode de fonctionnement, les signaux du premier ensemble de signaux de polarisation étant prévus de sorte à faire fonctionner le troisième transistor (M3, M'3) comme un interrupteur fermé (ON) tout faisant fonctionner le deuxième transistor (M2, M'2) comme un interrupteur ouvert (OFF).

3. Dispositif imageur infrarouge selon la revendication 2, dans lequel dans le premier mode de fonctionnement, une électrode de source du deuxième transistor (M2, M'2) est laissée flottante.

4. Dispositif imageur infrarouge selon l'une des revendications 1 à 3, dans lequel dans le deuxième mode de fonctionnement, le deuxième transistor (M2, M'2) et le troisième transistor (M3, M'3) forment un amplificateur de courant.

5. Dispositif imageur infrarouge selon la revendication 4, dans lequel dans la deuxième configuration, le bloc de commande applique un potentiel négatif à une électrode du deuxième transistor (M2, M'2).

6. Dispositif imageur infrarouge selon l'une des revendications 2 à 5, dans lequel le bloc de commande (90) de polarisation externe comporte une portion (108) de circuit apte à former un miroir de courant et dans lequel dans la deuxième configuration, le troisième transistor (M3, M'3) forme avec ladite portion (108) ce miroir de courant, de sorte à copier un courant (Id) généré par ladite portion (108) de circuit dudit bloc (90) de commande de polarisation.

7. Dispositif imageur infrarouge selon l'une des revendications 1 à 6, dans lequel le bloc de commande de polarisation (90) externe est doté d'une pluralité de sorties (S1, S2, S3) vers lesquelles les signaux de polarisation formant un ensemble de signaux de polarisation sont respectivement émis, le bloc de commande (90) de polarisation externe étant doté en outre d'au moins un circuit de commutation (100) comportant une pluralité d'interrupteurs (101, 102, 103, 104, 105), le circuit de commutation (100) permettant de connecter sélectivement chaque sortie (S1, S2, S3) à une ou plusieurs voies d'une pluralité de voies auxquelles des potentiels de polarisation sont appliqués, un ou plusieurs interrupteurs donnés de ladite pluralité d'interrupteur ayant des états respectifs, ouvert ou fermé, différents entre ladite première configuration et ladite deuxième configuration.

8. Dispositif imageur infrarouge selon l'une des revendications 1 à 7, dans lequel ledit ensemble d'éléments de détection (130) est situé dans une première région (Z1) d'une matrice d'éléments de détection, et dans lequel un premier ensemble de signaux de polarisation (VDI1, VBIAS1, VBI1) est émis par ledit bloc (90) de commande de polarisation externe audit ensemble d'éléments de détection, le dispositif imageur infrarouge comprenant un deuxième ensemble d'éléments de détection situés dans une deuxième région (Z2) de la matrice d'éléments de détection et dans lequel un deuxième ensemble de signaux de polarisation (VDI2, VBIAS2, VBI2) distinct des signaux du premier ensemble de signaux est appliqué audit deuxième ensemble d'éléments de détection.

9. Dispositif imageur infrarouge selon la revendication 8, comprenant un autre bloc (90b) de commande de polarisation externe, ledit autre bloc de commande de polarisation externe étant couplé audit deuxième ensemble d'éléments de détection et apte à appliquer aux pixels de lecture respectifs dudit deuxième ensemble d'éléments de détection, ledit deuxième ensemble de signaux de polarisation.

10. imageur infrarouge refroidi comprenant un dispositif selon l'une des revendications 1 à 9.

**Patentansprüche**

1. Infrarot-Bildgebungsvorrichtung, die einen Satz von Detektionselementen (130) umfasst, wobei jedes Detektionselement des Satzes von Detektionselementen (130) einen Fotodetektor (120, 220) umfasst, der einem Lesepixel (140, 240) für ein vom Fotodetektor (120, 220) erzeugtes Signal zugeordnet und mit diesem verbunden ist, wobei das Lesepixel mit einer kapazitiven Integrationslast zum Speichern versehen ist Ladungen, die vom Fotodetektor kommen, wobei das Lesepixel (140, 240) mit einer kapazitiven Integrationslast (143) versehen ist, um vom Fotodetektor (120, 220) stammende Lasten zu speichern, wobei das Lesepixel (140, 240) eine erste Stufe (141, 241) umfasst, die mit dem Fotodetektor (120, 220) und der kapazitiven Integrationslast (143) gekoppelt ist, wobei die erste Stufe mit Transistoren (M1, M'1, M2, M'2, M3, M'3) versehen ist und zur Vorspannung des Fotodetektors (120, 220) dient,

wobei die Bildgebungsvorrichtung mit mindestens einem Vorspannungssteuerblock (90) versehen ist, wobei der Vorspannungssteuerblock (90) dazu ausgelegt ist, an die erste Stufe (141, 241) des Lesepixels (40, 240) einen Satz von Vorspannungspotentialen anzulegen, wobei der Vorspannungssteuerblock (90) so rekonfigurierbar ist, dass er dazu ausgelegt ist, von einer ersten Konfiguration in eine zweite Konfiguration und von der zweiten Konfiguration in die erste Konfiguration zu wechseln,

wobei die erste Konfiguration eine Konfiguration ist, bei der der Vorspannungssteuerblock (90) dazu konfiguriert ist, einen ersten Satz von Vorspannungssignalen (VDI1, VBIAS1, VBI1) an die erste Stufe (141, 241) zu senden, so dass die erste Stufe (141, 241) einen ersten Betriebsmodus annimmt, der einem ersten Vorspannungsmodus des Fotodetektors (120, 220) entspricht,

wobei die zweite Konfiguration eine Konfiguration ist, bei der der Steuerblock dazu konfiguriert ist, einen zweiten Satz von Vorspannungssignalen (VDI2, VBIAS2, VBI2) an die erste Stufe (141, 241) zu senden, wobei sich die Signale des zweiten Satzes von den Signalen des ersten Satzes unterscheiden und so ausgebildet sind, dass die erste Transistorenstufe (141, 241) einen zweiten Betriebsmodus annimmt, der einem zweiten Vorspannungsmodus des Fotodetektors (120, 220) entspricht, wobei der erste Vorspannungsmodus des Fotodetektors (120, 220) ein Direktinjektions (DI)-Vorspannungsmodus ist, für den ein Satz von Transistoren (M2, M'2, M3, M'3) der ersten Stufe (141, 241) vorgespannt ist, so dass das Lesepixel (140) eine erste Eingangsimpedanz aufweist, wobei der zweite Vorspannungsmodus der Fotodiode ein Rückkopplungswiderstands-Direktinjektions (BDI)-Vorspannungsmodus des Fotodetektors ist, für den der Satz von Transistoren (M2, M'2, M3, M'3) der ersten Stufe (141, 241) vorgespannt ist, so dass das Lesepixel (140, 240) eine zweite Eingangsimpedanz aufweist, die niedriger als die erste Impedanz ist, wobei jedes Detektionselement des Satzes von Detektionselementen ein Lesepixel (140, 240) umfasst,

**dadurch gekennzeichnet, dass** sich der Vorspannungssteuerblock (90) außerhalb des Satzes von Detektionselementen (130) befindet, wobei jedes Detektionselement mit seinem jeweiligen Lesepixel versehen ist, dessen jeweilige erste Stufe (141, 241) einen ersten Direktinjektions-Transistor (M1, M'1), einen zweiten Transistor (M2, M'2) und einen dritten Transistor (M3, M'3) umfasst, wobei der erste Direktinjektions-Transistor (M1, M'1) direkt mit dem Fotodetektor (120, 220) und mit der kapazitiven Integrationslast (143) verbunden ist, wobei der erste Transistor (M1, M'1) ein Gate aufweist, das mit einer gemeinsamen Drain-Elektrode des zweiten Transistors (M2, M'2) und des dritten Transistors (M3, M'3) verbunden ist, wobei der zweite Transistor (M2, M'2) und der dritte Transistor (M3) so angeordnet sind, dass sie von dem externen Vorspannungssteuerblock (90) stammende Vorspannungssignale (VDI1, VBIAS1, VBI1, VDI2, VBIAS2, VBI2) empfangen.

2. Infrarot-Bildgebungsvorrichtung nach Anspruch 1, wobei im ersten Betriebsmodus die Signale des ersten Satzes von Vorspannungssignalen so ausgebildet sind, dass der dritte Transistor (M3, M'3) als geschlossener Schalter (ON) fungiert, während der zweite Transistor (M2, M'2) als offener Schalter (OFF) fungiert.

3. Infrarot-Bildgebungsvorrichtung nach Anspruch 2, wobei im ersten Betriebsmodus eine Source-Elektrode des zweiten Transistors (M2, M'2) schwebend gelassen wird.

4. Infrarot-Bildgebungsvorrichtung nach einem der Ansprüche 1 bis 3, wobei im zweiten Betriebsmodus der zweite Transistor (M2, M'2) und der dritte Transistor (M3, M'3) einen Stromverstärker bilden.

5. Infrarot-Bildgebungsvorrichtung nach Anspruch 4, wobei in der zweiten Konfiguration der Steuerblock ein negatives Potential an eine Elektrode des zweiten Transistors (M2, M'2) anlegt.

6. Infrarot-Bildgebungsvorrichtung nach einem der Ansprüche 2 bis 5, wobei der externe Vorspannungssteuerblock (90) einen Schaltungsabschnitt (108) umfasst, der dazu ausgelegt ist, einen Stromspiegel zu bilden, und wobei in der zweiten Konfiguration der dritte Transistor (M3, M'3) mit dem Abschnitt (108) den Stromspiegel bildet, um einen durch den Schaltungsabschnitt (108) des Vorspannungssteuerblocks (90) erzeugten Strom zu kopieren.

7. Infrarot-Bildgebungsvorrichtung nach einem der Ansprüche 1 bis 6, wobei der externe Vorspannungssteuerblock (90) mit einer Vielzahl von Ausgängen (S1, S2, S3) versehen ist, an die jeweils die Vorspannungssignale gesendet werden, die einen Satz von Vorspannungssignalen bilden, wobei der externe Vorspannungssteuerblock (90) ferner mit mindestens einem Schaltkreis (100) versehen ist, der eine Vielzahl von Schaltern (101, 102, 103, 104, 105) umfasst, wobei der Schaltkreis (100) es ermöglicht, jeden Ausgang (S1, S2, S3) selektiv mit einem oder mehreren Kanälen von einer Vielzahl von Kanälen zu verbinden, an die Vorspannungspotentiale angelegt werden, wobei einer oder mehrere gegebene Schalter der Vielzahl von Schaltern jeweilige Zustände, offen oder geschlossen, aufweisen, die sich zwischen der ersten Konfiguration und der zweiten Konfiguration unterscheiden.

8. Infrarot-Bildgebungsvorrichtung nach einem der Ansprüche 1 bis 7, wobei sich der Satz von Detektionselementen (130) in einem ersten Bereich (Z1) einer Matrix von Detektionselementen befindet, und wobei ein erster Satz von Vorspannungssignalen (VDI1, VBIAS1, VBI1) von dem externen Vorspannungssteuerblock (90) an den Satz von Detektionselementen gesendet wird, wobei die Infrarot-Bildgebungsvorrichtung einen zweiten Satz von Detektionselementen umfasst, die sich in einem zweiten Bereich (Z2) der Matrix von Detektionselementen befinden, und wobei ein zweiter Satz von Vorspannungssignalen (VDI2, VBIAS2, VBI2), die sich von den Signalen des ersten Satzes von Signalen unterscheiden, an den zweiten Satz von Detektionselementen angelegt wird.

9. Infrarot-Bildgebungsvorrichtung nach Anspruch 8, die einen weiteren externen Vorspannungssteuerbock (90b) umfasst, wobei der weitere externe Vorspannungssteuerblock mit dem zweiten Satz von Detektionselementen gekoppelt und dazu ausgelegt ist, den zweiten Satz von Vorspannungssignalen an die jeweiligen Lesepixel des zweiten Satzes von Detektionselementen anzulegen.

10. Gekühlter Infrarot-Bildgeber, der eine Vorrichtung nach einem der Ansprüche 1 bis 9 umfasst.

## Claims

1. Infrared imaging device including a set of detection elements (130), each detection element in said set of detection elements (130) comprising a photodetector (120, 220) associated with and connected to a pixel (140, 240) for reading a signal generated by the photodetector (120, 220), the reading pixel (140, 240) being provided with an integration capacitive load (143) for storing charges coming from the photodetector (120, 220), the reading pixel (140, 240) comprising a first stage (141, 241) coupled to the photodetector (120, 220) and to the integration capacitive load (143), said first stage being provided with transistors (M1, M'1, M2, M'2, M3, M'3) and serving for the biasing of the photodetector (120, 220),

said imaging device being provided with at least one biasing control unit (90), said biasing control unit (90) being able to apply, to said first stage (141, 241) of the reading pixel (40, 240), a set of biasing potentials, the biasing control unit (90) being reconfigurable so as to be able to pass from a first configuration to a second configuration and from the second configuration to the first configuration,

the first configuration being a configuration wherein the biasing control unit (90) is configured to send a first set of biasing signals (VDI1, VBIAS1, VBI1) to said first stage (141, 241) so that said first stage (141, 241) adopts a first operating mode corresponding to a first biasing mode of the photodetector (120, 220),

the second configuration being a configuration wherein the control unit is configured to send a second set of biasing signals (VDI2, VBIAS2, VBI2) to said first stage (141, 241), the signals in the second set being different from the signals in the first set and designed so that said first transistor stage (141, 241) adopts a second operating mode corresponding to a second biasing mode of the photodetector (120, 220), said first biasing mode of the photodetector (120, 220) being a direct-injection (DI) biasing mode for which a set of transistors (M2, M'2, M3, M'3) of the first stage (141, 241) are biased so that said reading pixel (140) has a first input impedance, said second biasing mode of the photodiode being a buffer direct injection (BDI) biasing mode of the photodetector for which said set of transistors (M2, M'2, M3, M'3) of said first stage (141, 241) are biased so that said reading pixel (140, 240) has a second input impedance lower than the first impedance,

wherein each detection element of said set of detection elements comprises a reading pixel (140, 240), **characterized in that**

said biasing control unit (90) is external to said set of detection elements (130),

each detection element (130) is provided with its respective reading pixel which said respective first stage (141, 241) comprises a first so-called direct-injection transistor (M1, M'1) connected to the photodetector (120, 220) and a second transistor (M2, M'2) and of a third transistor (M3, M'3),

the first so-called direct-injection transistor (M1, M'1) being connected to the photodetector and to the integration capacitive load (143), the first transistor (M1, M'1) having a gate to the common drain of the second transistor (M2, M'2) and the third transistor (M3), the second transistor (M2, M'2) and the third transistor (M3) being arranged so as to receive biasing signals (VDI1, VBIAS1, VBI1, VDI2, VBIAS2, VBI2) coming from said external biasing control unit (90).

2. Infrared imaging device according to claim 1, wherein, in the first operating mode, the signals in the first set of biasing signals being designed so as to make the third transistor (M3, M'3) function as a closed switch (ON) while making the second transistor (M2, M'2) function as an open switch (OFF).

3. Infrared imaging device according to claim 2, wherein, in the first operating mode, an electrode of the second transistor (M2, M'2) is left floating.

4. Infrared imaging device according to one of claims 1 to 3, wherein, in the second operating mode, the second transistor (M2, M'2) and the third transistor (M3, M'3) form a current amplifier.

5. Infrared imaging device according to claim 4, wherein, in the second configuration, the control unit applies a negative potential to an electrode of the second transistor (M2, M'2).

6. Infrared imaging device according to one of claims 2 to 5, wherein the external biasing control unit (90) includes a circuit portion (108) able to form a current mirror and wherein, in the second configuration, the third transistor (M3, M'3) forms with said portion (108) this current mirror, so as to copy a current (Id) generated by said circuit portion (108) of said biasing control unit (90).

7. Infrared imaging device according to one of claims 1 to 6, wherein the external biasing control unit (90) is provided with a plurality of outputs (S1, S2, S3) to which the biasing signals forming a set of biasing signals are respectively sent, the external biasing control unit (90) furthermore being provided with at least one switching circuit (100) including a plurality of switches (101, 102, 103, 104, 105), the switching circuit (100) making it possible to selectively connect each output (S1, S2, S3) to one or more channels in a plurality of channels to which biasing potentials are applied, one or more given switches in said plurality of switches having respective states, open or closed, that are different between said first configuration and said second configuration.

8. Infrared imaging device according to one of claims 1 to 7, wherein said set of detection elements (130) is situated in a first region (Z1) of a matrix of detection elements, and wherein a first set of biasing signals (VDI1, VBIAS1, VBI1) is sent by said external biasing control unit (90) to said set of detection elements, the infrared imaging device comprising a second set of detection elements situated in a second region (Z2) of the matrix of detection elements, and wherein a second set of biasing signals (VDI2, VBIAS2, VBI2) distinct from the signals in the first set of signals is applied to said second set of detection elements.

9. Infrared imaging device according to claim 8, comprising another external biasing control unit (90b), said other external biasing control unit being coupled to said second set of detection elements and able to apply said second set of biasing signals to the respective reading pixels of said second set of detection elements.

10. Cooled infrared imager comprising a device according to one of claims 1 to 9.

$V_{subpv}$

I.R

Id

$V_{pol}$

4

2

5

$C_{int}$

RESET

FIG.1

41

46

45

reset

$V_{ref}$

+

A

−

45

$C_{int}$

40

$V_{pol}$

Id

I.R

2

$V_{SUBPV}$

FIG.2

FIG.3

FIG.4

FIG.5A

FIG.5B

FIG.6

FIG.7

FIG.8A

FIG.8B

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9215386 B2

- US 8878595 B2